# DEMANDE DE BREVET EUROPEEN

(11) **EP 1 505 824 A1**
(43) Date de publication de la demande: **09.02.2005**
(21) Numéro de dépôt: 04103809.2
(22) Date de dépôt: 06.08.2004
(51) Int. Cl.: H04N 3/32

(54) **Correction de la vitesse de balayage d'un écran d'affichage**

(30) Priorité: 08.08.2003 FR 0350415
(71) Demandeur: ST MICROELECTRONICS S.A., 92120 Montrouge (FR)
(72) Inventeur: Paladel, Jean-Marie, 38210 TULLINS (FR); Marchand, Benoît, 38000 GRENOBLE (FR); Van-Lamdeghem, Benoît, 38360 NOYAREY (FR)
(74) Mandataire: de Beaumont, Michel

(57) **Abrégé**

L'invention concerne un procédé et un dispositif de correction de la vitesse de balayage ligne d'un écran d'affichage en fonction de la luminance (Y) des pixels affichés sur l'écran, dans lesquels la vitesse de balayage ligne est modifiée par un moyen de correction commandé à partir d'un signal de commande variant comme le produit des dérivées première et seconde du signal de luminance (Y).

## Description

La présente invention concerne un dispositif et un procédé de correction de la vitesse de balayage d'un écran d'affichage.

De façon générale, une image vidéo est affichée sur l'écran d'affichage d'un terminal d'affichage en excitant des luminophores disposés sur l'écran au moyen d'un ou de plusieurs faisceaux d'électrons, émis par des canons à électrons. Dans le cas d'un écran couleur, on utilise généralement un tube cathodique à trois faisceaux d'électrons qui excitent chacun un type de luminophore émettant respectivement une lumière rouge, verte ou bleue. Les faisceaux d'électrons sont modulés en intensité à partir de signaux de modulation représentatifs de l'image à afficher sur l'écran.

De façon générale, les faisceaux d'électrons sont focalisés en un point de l'écran et sont déviés ensemble pour balayer des lignes de l'écran. Les faisceaux d'électrons balayent les lignes de l'écran de la gauche vers la droite de l'écran, en revenant sur la gauche de l'écran après le balayage de chaque ligne. Le balayage de l'écran est réalisé depuis le bord horizontal supérieur vers le bord horizontal inférieur.

Les déviations des faisceaux d'électrons sont obtenues par deux bobines de déflexion principales, une bobine de déflexion horizontale principale qui contrôle le balayage de chaque ligne de l'écran ou balayage horizontal, et une bobine de déflexion verticale principale qui contrôle les déviations des faisceaux d'électrons dans la direction verticale.

Les signaux de modulation des faisceaux d'électrons sont généralement des signaux à basse tension et doivent être amplifiés par un amplificateur de puissance avant d'être transmis aux canons à électrons. Pour réduire le coût du terminal d'affichage, l'amplificateur de puissance est généralement un amplificateur de puissance à bas coût qui comporte une bande passante limitée. Ceci impose une vitesse maximale de variation du signal de modulation. Par exemple, pour un affichage en noir et blanc, on obtient une région de dégradé de gris plus ou moins large lors d'une transition entre des régions blanche et noire. Or, il est généralement souhaitable que l'image affichée ait une netteté élevée, c'est-à-dire que les transitions entre des régions associées à des signaux de modulation de niveau bas et haut soient franches. A titre d'exemple, ceci correspond pour une image affichée en noir et blanc à des transitions franches entre les régions noires et blanches.

Pour améliorer la netteté des images affichées, il est connu de corriger la vitesse de balayage horizontale.

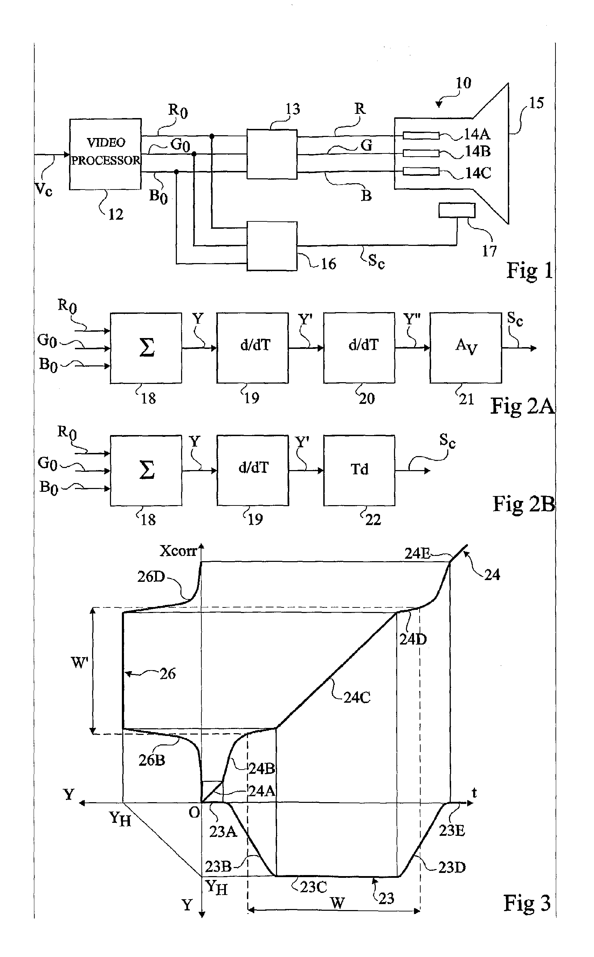

La figure 1 représente, de façon schématique, un terminal d'affichage 10 comprenant un circuit de correction classique de la vitesse de balayage horizontale. Le terminal d'affichage 10 comprend un module de traitement vidéo 12 (VIDEO PROCESSOR) qui reçoit un signal vidéo composite V_{C}. Après un traitement classique du signal vidéo composite V_{C}, le module de traitement vidéo 12 fournit, dans le cas d'un écran d'affichage couleur, trois signaux de modulation basse tension R₀, G₀, B₀ associés respectivement aux couleurs rouge, verte et bleue. Les signaux de modulation R₀, G₀, B₀ sont amplifiés par un amplificateur de puissance 13 qui fournit trois signaux de modulation haute tension amplifiés R, G, B. Chaque signal de modulation amplifié R, G, B est fourni à un canon à électrons 14A, 14B, 14C d'un écran d'affichage 15 produisant un faisceau d'électrons dont l'intensité dépend de l'intensité du signal de modulation amplifié R, G, B associé.

Le circuit de correction comprend un circuit de commande et d'amplification 16 recevant les signaux de modulation basse tension R₀, G₀, B₀ et fournit un signal de commande S_{C} à une bobine de déflexion horizontale additionnelle 17. La bobine de déflexion horizontale additionnelle 17 modifie la vitesse de balayage horizontale imposée par la bobine de déflexion horizontale principale (non représentée).

La figure 2A représente, de façon schématique, un exemple de réalisation du circuit de commande et d'amplification 16 comprenant un additionneur 18 (Σ) recevant les signaux de modulation basse tension R₀, G₀, B₀ et fournissant un signal de luminance Y correspondant à la somme pondérée des trois signaux de modulation R₀, G₀, B₀. Un premier dérivateur 19 (d/dT) reçoit le signal de luminance Y et fournit un signal Y' correspondant à la dérivée première du signal Y. Un second dérivateur 20 (d/dT) reçoit le signal Y' et fournit un signal Y" correspondant à la dérivée seconde du signal Y. Un amplificateur de tension 21 (Aᵥ) reçoit le signal Y" et fournit le signal de commande S_{C} qui correspond donc à la dérivée seconde amplifiée du signal de luminance Y. Le signal S_{C} correspond alors à une tension qui est appliquée aux bornes de la bobine additionnelle 17. La bobine additionnelle 17 se comportant comme un intégrateur, le courant qui la traverse est donc proportionnel au signal Y', c'est-à-dire à la dérivée première du signal de luminance Y.

La figure 2B représente un autre exemple de réalisation du circuit de commande et d'amplification 16 dans laquelle le second dérivateur 20 et l'amplificateur de tension 21 de l'exemple de réalisation illustré en figure 2A sont remplacés par un amplificateur de transconductance 22 recevant le signal Y' et fournissant le signal de commande S_{C}. Le signal de commande S_{C} correspond alors à un courant qui traverse la bobine additionnelle 17. Le signal de commande S_{C} est donc proportionnel à la dérivée du signal de luminance Y.

La figure 3 illustre la façon dont une image affichée est modifiée lorsqu'on utilise le circuit de correction de la figure 1. La courbe 23 représente un exemple d'évolution temporelle du signal de luminance Y pour le balayage d'une ligne de l'écran d'affichage 15. Le signal de luminance Y correspondant à une somme pondérée des signaux de modulation R₀, G₀, B₀, il est représentatif de l'intensité lumineuse émise par le pixel de l'écran exposé aux faisceaux d'électrons modulés à partir des signaux de modulation R₀, G₀, B₀. Dans le présent exemple, le signal de luminance Y comporte successivement un palier 23A au niveau bas, une transition 23B entre le niveau bas et le niveau haut Y_{H}, un palier 23C au niveau haut Y_{H}, une transition 23D entre le niveau haut Y_{H} et le niveau bas et enfin un palier 23E au niveau bas. Lors des transitions montante 23B et descendante 23D, la courbe 23 représentative du signal de luminance Y correspond généralement sensiblement à une portion d'une fonction sinus élevée au carré.

La courbe 24 représente l'évolution temporelle de l'abscisse X_{corr} du pixel exposé aux faisceaux d'électrons de la ligne balayée de l'écran 15. L'origine des abscisses correspond par exemple au pixel en début de ligne à gauche de l'écran 15. La vitesse de balayage horizontal correspond à la pente de la courbe 24. En l'absence de correction de balayage horizontal, la déviation des faisceaux d'électrons est obtenue uniquement par la bobine de déflexion horizontale principale et est généralement effectuée à vitesse constante ou vitesse de base.

Lorsque le signal de luminance Y est constant, c'est-à-dire pour les paliers de niveau bas 23A, 23E et haut 23C, la dérivée première du signal de luminance Y est nulle et le courant traversant la bobine de déflexion horizontale additionnelle est nul. Le balayage de l'écran est alors obtenu uniquement par la bobine de déflexion horizontale principale, ce qui correspond à des portions rectilignes 24A, 24C, 24E de la courbe 24. Lors de la transition montante 23B du signal de luminance Y, la dérivée première du signal de luminance Y varie et la bobine de déflexion horizontale additionnelle 17 modifie la vitesse de balayage horizontale. La courbe 24 comporte donc une portion 24B correspondant à une vitesse de balayage horizontale qui diminue depuis une valeur supérieure à la vitesse de base jusqu'à une vitesse inférieure à la vitesse de base. Lors de la transition descendante 23D du signal de luminance Y, la courbe 24 comporte une portion 24D correspondant à une vitesse de balayage horizontale qui augmente depuis une valeur inférieure à la vitesse de base jusqu'à une vitesse supérieure à la vitesse de base.

La courbe 26 représente l'évolution du signal de luminance Y en fonction de l'abscisse X_{corr}. La courbe 26 est représentative de l'intensité lumineuse réellement perçue par un spectateur regardant la ligne de l'écran balayée avec un balayage horizontal correspondant à la courbe 24. Lors de la transition montante 23B, le spectateur perçoit une zone 26B où le signal de luminance augmente depuis le niveau bas lentement puis rapidement jusqu'au niveau haut. De manière analogue, lors de la transition descendante 23D, le spectateur perçoit une zone 26D où le signal de luminance diminue depuis le niveau haut rapidement puis lentement jusqu'au niveau bas. Les transitions entre les niveaux bas et haut du signal de luminance sont donc plus franches et l'image affichée apparaît globalement plus nette.

Toutefois, si on note W la largeur balayée de l'écran 15 pour laquelle le signal de luminance Y est supérieur à la moitié du niveau haut en l'absence de correction de balayage et W' la largeur balayée avec une correction de balayage, on remarque que W' est inférieure à W. Le spectateur perçoit donc des zones d'intensité lumineuse élevée qui sont réduites par rapport à celles qui seraient perçues en l'absence de correction de balayage horizontal. De façon générale, les dimensions de certaines parties d'une image affichée selon le procédé de correction précédent peuvent apparaître modifiées aux yeux d'un spectateur. A titre d'exemple, dans le cas où un damier à cases noires et blanches est affiché, les cases blanches apparaissent avec une largeur inférieure aux cases noires.

La présente invention vise une correction de la vitesse de balayage horizontale de l'écran qui améliore la netteté de l'image affichée sans déformer l'image affichée.

Pour atteindre cet objet, la présente invention prévoit un procédé de correction de la vitesse de balayage ligne d'un écran d'affichage en fonction de la luminance des pixels affichés sur l'écran, dans lequel la vitesse de balayage ligne est modifiée par un moyen de correction commandé à partir d'un signal de commande étant obtenu à partir d'un étirement temporel du produit des dérivées première et seconde du signal de luminance.

Selon un objet de la présente invention, l'écran est balayé par trois faisceaux d'électrons, chaque faisceau d'électrons étant modulé à partir d'un signal de modulation, le signal de luminance étant obtenu à partir d'une somme pondérée des signaux de modulation.

Selon un objet de la présente invention, l'écran est balayé par au moins un faisceau d'électrons déplacé par au moins une bobine de déflexion, le moyen de correction comprenant une bobine de déflexion additionnelle commandée par un courant variant comme l'intégrale du signal de commande.

Selon un objet de la présente invention, l'écran est balayé par au moins un faisceau d'électrons déplacé par au moins une bobine de déflexion, le moyen de correction comprenant une bobine de déflexion additionnelle commandée par un courant variant comme le signal de commande.

Selon un objet de la présente invention, l'écran est balayé par au moins un faisceau d'électrons modulé à partir d'un signal de modulation, un amplificateur recevant le signal de modulation et fournissant un signal de modulation amplifié à un canon à électrons produisant le faisceau d'électrons, le signal de luminance utilisé pour la correction de la vitesse de balayage étant obtenu par filtrage du signal de modulation par un filtre ayant sensiblement la même bande passante que l'amplificateur.

Selon un objet de la présente invention, le filtre impose en outre un retard au signal de luminance sensiblement égal au retard fourni par l'amplificateur.

Selon un objet de la présente invention, le signal de commande est amplifié par un gain qui dépend du signal de luminance.

Selon un objet de la présente invention, le gain dépend de l'évolution du signal de luminance sur des lignes voisines de la ligne balayée.

Selon un objet de la présente invention, le gain dépend de la position du faisceau d'électrons par rapport à l'écran.

Selon un objet de la présente invention, le signal de commande modifie la vitesse de balayage de sorte que la vitesse de balayage est sensiblement nulle lors de variations du signal de luminance.

La présente invention prévoit également un dispositif de correction de la vitesse de balayage ligne d'un écran d'affichage par au moins un faisceau d'électrons fourni par un canon à électrons commandé à partir d'un signal de modulation, comprenant un moyen de commande recevant le signal de modulation et fournissant un signal de commande à un moyen de correction de la vitesse de balayage ligne, le signal de commande étant obtenu à partir d'un étirement temporel du produit des dérivées première et seconde du signal de luminance.

Cet objet, ces caractéristiques et avantages, ainsi que d'autres de la présente invention seront exposés en détail dans la description suivante de modes de réalisation particuliers faite à titre non limitatif en relation avec les figures jointes parmi lesquelles :
la figure 1, précédemment décrite, représente de façon schématique, un circuit de correction classique de la vitesse de balayage horizontale d'un écran ;
les figures 2A et 2B, précédemment décrites, représentent des exemples de réalisation d'une partie du circuit de correction de la figure 1 ;
la figure 3, précédemment décrite, illustre la correction apportée sur un exemple d'image à afficher par un circuit de correction classique ;
les figures 4A et 4B représentent deux modes de réalisation d'une partie du circuit de correction de la vitesse de balayage horizontale selon l'invention ;
la figure 5 illustre, de façon schématique, le principe du procédé de correction de la vitesse de balayage selon l'invention ;
la figure 6 représente la correction apportée sur un exemple d'image à afficher à partir du procédé de correction illustré en figure 5 ; et
la figure 7 représente, de façon schématique, un autre mode de réalisation d'une partie du circuit de correction selon l'invention.

L'invention consiste à corriger la vitesse de balayage horizontale à partir à la fois de la dérivée première et de la dérivée seconde du signal de luminance. Il est alors notamment possible de corriger la vitesse de balayage horizontale pour ne pas modifier la position sur l'écran du pixel associé à la valeur de luminance pour lequel la dérivée première du signal de luminance Y n'est pas nulle et la dérivée seconde est nulle, point qui correspond au point d'inflexion et généralement à la position du pixel associé à une valeur de luminance approximativement égale à la moitié du niveau haut. Les déformations de l'image affichée sont ainsi limitées.

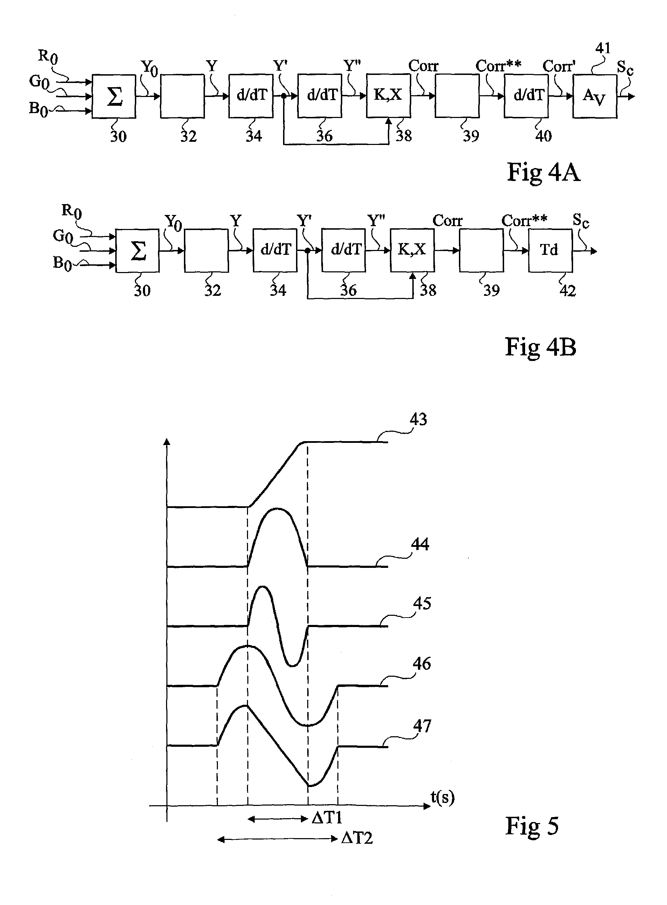

La figure 4A représente un premier mode de réalisation selon l'invention du circuit de commande 16. Le circuit de commande 16 comprend un additionneur 30 (Σ) recevant les signaux de modulation basse tension R₀, G₀, B₀ et fournissant un signal de luminance préalable Y₀ correspondant à une somme pondérée des signaux R₀, G₀, B₀. Un circuit de filtrage et de retard 32 reçoit le signal de luminance primitif Y₀ et fournit le signal de luminance Y. Le circuit de filtrage et de retard 32 agit comme un filtre passe-bas et apporte un retard au signal de luminance primitif Y₀ pour simuler les caractéristiques de fonctionnement de l'amplificateur de puissance 13. Un premier dérivateur 34 (d/dT) reçoit le signal de luminance Y et fournit un signal Y' correspondant à la dérivée première du signal de luminance Y. Un second dérivateur 36 (d/dT) reçoit le signal Y' et fournit un signal Y" correspondant à la dérivée seconde du signal de luminance Y. Un multiplicateur 38 (K,X) reçoit le signal de dérivé première Y' et le signal de dérivée seconde Y" et fournit un signal Corr correspondant au produit du signal de dérivé première Y', du signal de dérivé seconde Y" et d'un gain d'amplification K. Un module de traitement 39 reçoit le signal Corr et fournit un signal Corr** qui correspond au signal Corr "dilaté" selon l'axe temporel et modifié comme cela sera décrit plus en détail par la suite. Dans le premier mode de réalisation, la bobine de déflexion horizontale additionnelle 17 est commandée par une tension appliquée à ses bornes. Le circuit de commande comprend alors un troisième dérivateur 40 (d/dT) recevant le signal Corr** et fournissant un signal Corr' à un amplificateur de tension 41 (A_{V}) qui fournit la tension de commande S_{C} appliquée aux bornes de la bobine 17.

La figure 4B représente un second mode de réalisation dans lequel le circuit de commande et d'amplification 16 comprend, à la place du troisième dérivateur 40 et de l'amplificateur de tension 41 du premier mode de réalisation, un amplificateur à transconductance 42 recevant le signal de correction Corr** et fournissant un signal de commande S_{C} correspondant à un courant alimentant directement la bobine de déflexion horizontale additionnelle 17.

Dans les premier et second modes de réalisation, le courant traversant la bobine de déflexion horizontale additionnelle 17 est obtenu par une fonction affine du signal Corr**, c'est-à-dire une fonction du produit des dérivées première et seconde du signal de luminance Y. Le gain K est fixé selon la valeur maximale de la vitesse de variation du signal de luminance Y. Plus la vitesse maximale est élevée, plus le gain K est faible. Le circuit de commande 16 selon l'invention peut être réalisé sous forme numérique ou analogique. En particulier, le circuit de commande peut être complètement intégré au module de traitement vidéo 12 et recevoir directement des signaux numériques fournis par le module de traitement vidéo 12.

La figure 5 représente des courbes 43, 44, 45, 46 et 47 illustrant le principe du procédé de correction selon l'invention. Les courbes 43, 44 et 45 représentent respectivement l'évolution du signal de luminance Y, de la dérivée première Y' du signal de luminance, et du signal Corr lors d'une transition du signal de luminance Y entre le niveau bas et le niveau haut.

Selon les premier et second modes réalisation du procédé de correction selon l'invention, un traitement est réalisé sur le signal Corr pour fournir un signal Corr* représenté par la courbe 46 qui correspond au signal Corr "dilaté" selon l'axe temporel.

A titre d'exemple, le facteur de dilatation peut être sensiblement de l'ordre de 2, c'est-à-dire que si ΔT1 correspond à la durée de la transition du signal de luminance Y, la durée ΔT2 de variation du signal Corr* est égale au double de ΔT1. La synchronisation du signal Corr* par rapport au signal Corr peut être obtenue à partir de l'instant auquel le signal Y' atteint un maximum local, ce qui correspond à l'instant pour lequel le signal Corr s'annule. Il suffit donc d'imposer que l'instant auquel le signal Corr* s'annule corresponde à l'instant auquel le signal Y' atteint un maximum local.

La courbe 47 correspond au signal Corr** obtenu par un traitement supplémentaire du signal Corr*. A titre d'exemple, le signal Corr** comprend une rampe décroissante sensiblement linéaire pendant la durée ΔT1 et est identique au signal Corr* par ailleurs (éventuellement multiplié par un coefficient d'amplification adapté). La rampe est telle que la somme de la force magnétomotrice fournie par la bobine de déflexion additionnelle 17 et de la force magnétomotrice fournie par la bobine de déflexion principale (fournie à partir d'une rampe linéaire montante comme cela a été décrit précédemment) est constante à chaque instant pendant la durée ΔT1.

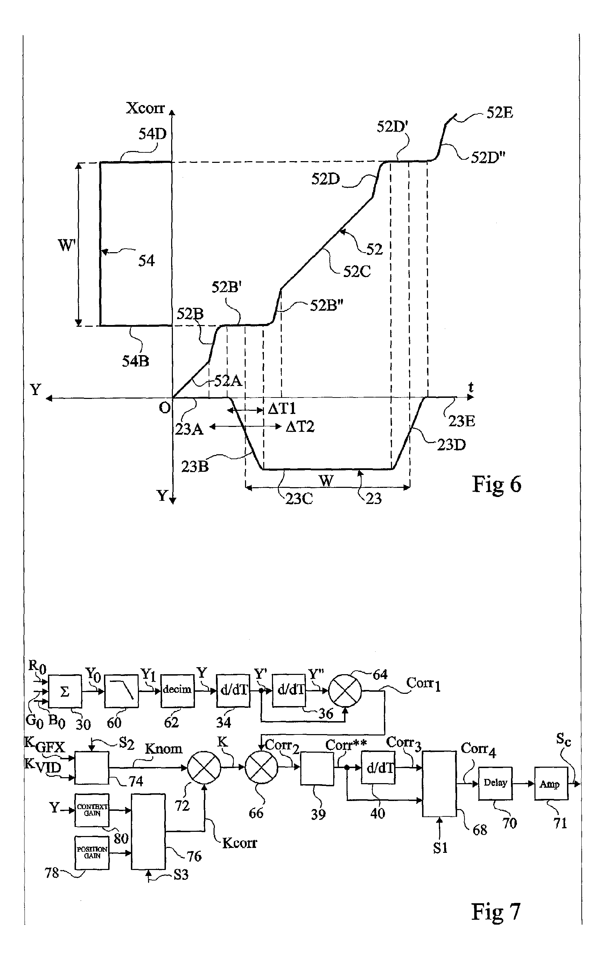

La figure 6 représente des courbes analogues aux courbes représentées en figure 3 obtenues avec une courbe d'évolution du signal de luminance Y similaire à la courbe 23 de la figure 3 et pour une correction réalisée avec le signal Corr**.

Pour les paliers de niveau bas 23A, 23E et haut 23C, la contribution de la bobine de déflexion horizontale additionnelle 17 est nulle sauf un peu avant et un peu après une transition 23B, 23D entre paliers. Seule la bobine de déflexion horizontale principale contribue alors à la vitesse de balayage qui, dans le présent exemple, est égale à une vitesse constante appelée vitesse de base. La courbe 52 représentative de l'abscisse corrigée X_{corr} correspond alors à des portions 52A, 52C, 52E d'une rampe linéaire. Pendant une variation du signal de luminance Y et pendant une période qui précède et une période qui suit une telle variation, le signal Corr** varie et la bobine de déflexion horizontale additionnelle 17 fournit une force magnétomotrice additionnelle qui s'ajoute algébriquement à la force magnétomotrice fournie par la bobine de déflexion horizontale principale.

Le signal Corr** est tel que, pendant la durée (ΔT2-ΔT1)/2 qui précède une transition 23B du signal de luminance Y entre le niveau bas et le niveau haut, la vitesse de balayage augmente brusquement jusqu'à une vitesse supérieure à la vitesse de base puis présente une phase de décélération 52B depuis la vitesse supérieure jusqu'à une vitesse sensiblement nulle. Pendant la transition 23B, la vitesse de balayage présente une phase 52B' où elle reste sensiblement nulle. Pendant la durée (ΔT2-ΔT1)/2 qui suit la transition 23B du signal de luminance Y entre le niveau bas et le niveau haut, la vitesse de balayage présente une phase d'accélération 52B" depuis la vitesse nulle jusqu'à une vitesse supérieure à la vitesse de base, puis diminue brusquement jusqu'à la vitesse de base. Pour une transition 23D entre le niveau haut et le niveau bas du signal de luminance Y, la vitesse de balayage présente des phases successives 52D, 52D', 52D" de décélération, de maintien à vitesse nulle et d'accélération similaires respectivement aux phases 52B, 52B', 52B".

La courbe 54 représente l'évolution du signal de luminance Y en fonction de l'abscisse corrigée X_{corr}. Le faisceau d'électrons balayant l'écran est sensiblement immobile par rapport à l'écran lors des transitions 23B, 23D du signal de luminance Y puisque l'abscisse corrigée X_{corr} est constante. La courbe 54 représentative du signal de luminance Y en fonction de l'abscisse corrigée X_{corr} présente donc un front montant 54B et un front descendant 54D très abrupts. Les largeurs W et W' sont alors sensiblement identiques. L'image corrigée est perçue par un spectateur avec une meilleure netteté sans que les dimensions de l'image n'apparaissent modifiées.

Le signal Corr*, très proche du signal Corr**, peut être directement utilisé à la place du signal Corr**. Un avantage est que le signal Corr* est relativement simple à obtenir à partir du signal Corr. L'abscisse corrigée X_{corr} obtenue en utilisant directement le signal Corr* est très proche de la courbe 52. Toutefois, les fronts montants et descendants de la courbe représentative du signal de luminance Y en fonction de l'abscisse corrigée X_{corr} sont légèrement moins abrupts que les fronts 54B et 54D.

Lorsque les signaux Corr et Corr* sont obtenus par traitement numérique, un exemple de procédé d'obtention des données numériques représentatives du signal Corr* consiste à réaliser un suréchantillonnage du signal Corr (par exemple en fournissant des données numériques supplémentaires par extrapolation linéaire des données numériques représentatives du signal Corr).

La figure 7 représente, de façon schématique, un troisième mode de réalisation du circuit de commande 16 selon l'invention adapté au traitement de signaux numériques. Les éléments communs aux premier ou second modes de réalisation ont les mêmes références.

L'additionneur 30 reçoit les signaux R₀, G₀, B₀ sous forme numérique et fournit le signal de luminance numérique primitif Y₀ à un filtre numérique 60 passe-bas qui simule la bande passante de l'amplificateur vidéo 13. Le filtre numérique 60 fournit un signal de luminance intermédiaire Y₁ à un décimateur 62. Le filtre numérique 60 est par exemple un filtre numérique à coefficients programmables, la programmation des coefficients étant effectuée selon la nature de l'amplificateur vidéo 13 utilisé. Le décimateur 62 détermine le signal de luminance Y en choisissant seulement certaines des valeurs numériques du signal de luminance intermédiaire Y₁ (par exemple une valeur numérique sur deux, trois ou cinq, etc...) fournies par le filtre numérique 60. Le premier dérivateur 34 reçoit le signal de luminance Y et fournit le signal Y' de dérivée première au second dérivateur 36. Le rapport de décimation est fixé notamment en fonction de l'algorithme choisi pour le calcul de dérivation par les dérivateurs 34, 36. Les signaux numériques de dérivée première Y' et de dérivée seconde Y" sont multipliés par un premier multiplicateur 64 pour fournir le signal corrigé Corr₁ qui est multiplié par le gain K par un deuxième multiplicateur 66 pour former le signal Corr₂. Le signal Corr₂ est fourni au module de traitement 39 qui fournit un signal Corr** comme cela a été décrit précédemment. Le troisième dérivateur 40 reçoit le signal Corr** et fournit un signal Corr₃. Un multiplexeur 68 reçoit les signaux Corr** et Corr₃. En fonction de la valeur d'un signal de sélection S₁, le multiplexeur 68 fournit à un module de retard 70 (Delay) un signal Corr₄ égal au signal Corr₃ ou au signal Corr**. Le module de retard 70 alimente un amplificateur 71 (Amp) qui fournit le signal de commande S_{C}. Le filtre numérique 60 et le module de retard 70 jouent le rôle du circuit de filtrage et de retard 32 mentionné précédemment. Lorsque le signal Corr₃ est sélectionné par le multiplexeur 68, l'amplificateur 71 correspond à un amplificateur de tension et le troisième exemple de réalisation est équivalent au premier mode de réalisation. Lorsque le signal Corr** est sélectionné par le multiplexeur 68, l'amplificateur 71 est alors un amplificateur à transconductance et le troisième mode de réalisation correspond au deuxième mode de réalisation.

Le gain K est fourni par un troisième multiplicateur 72 et correspond au produit d'un gain nominal Kₙₒₘ et d'un gain correctif K_{corr}.

Le gain nominal Kₙₒₘ est fourni par un multiplexeur 74 et correspond, en fonction de la valeur d'un signal de sélection S₂, à une première K_{VID} ou une seconde K_{GFX} valeur de gain. La première valeur de gain K_{VID} est utilisée lorsque l'image à afficher correspond à une image classique extraite depuis le signal vidéo reçu par le terminal d'affichage. La seconde valeur de gain K_{GFX} est utilisée lorsque l'image à afficher correspond à des éléments graphiques qui sont rajoutés à l'image classique. Il peut s'agir par exemple d'éléments graphiques produits directement par le module de traitement vidéo 12 et correspondant à du texte affiché sur l'écran lors du réglage de paramètres de fonctionnement du terminal d'affichage ou d'informations contenus dans le signal vidéo qui sont affichées suite à une action volontaire du spectateur (par exemple des informations du type "télétexte").

Le gain correctif K_{corr} est fourni par un multiplexeur 76, et, en fonction d'un signal de sélection S₃, est égal à :
- une première valeur de gain correctif fournie par un module de gain de position 78 (POSITION GAIN) qui dépend de la position du faisceau d'électrons par rapport à l'écran ;
- une seconde valeur de gain correctif fournie par un module de correction contextuelle 80 (CONTEXT GAIN). La seconde valeur de gain correctif varie selon les éléments graphiques à afficher sur l'écran. Il s'agit, par exemple, d'une correction apportée lorsque le graphisme à afficher a une forme particulière, par exemple circulaire, pour laquelle il est préférable que les transitions soient relativement douces pour que les contours de l'image affichée n'apparaissent pas au spectateur trop en escaliers. Pour ce faire, le module de contexte de gain 80 peut recevoir les valeurs numériques du signal de luminance Y sur plusieurs lignes consécutives à afficher pour déterminer la seconde valeur du gain de correction ; et
- une absence de correction, c'est-à-dire un gain correctif égal à "1".

Bien entendu, la présente invention est susceptible de diverses variantes et modifications qui apparaîtront à l'homme de l'art. En particulier, dans le troisième mode de réalisation, les dérivateurs 34, 36, 40 peuvent mettre en oeuvre différents algorithmes pour le calcul de la dérivation, notamment en utilisant plusieurs valeurs numériques successives ou non, du signal en entrée.

## Revendications

1. Procédé de correction de la vitesse de balayage ligne d'un écran d'affichage (15) en fonction de la luminance (Y) des pixels affichés sur l'écran, **caractérisé en ce que** la vitesse de balayage ligne est modifiée par un moyen de correction (17) commandé à partir d'un signal de commande (S_{C}) obtenu à partir d'un étirement temporel du produit des dérivées première (Y') et seconde (Y") du signal de luminance (Y).

2. Procédé de correction selon la revendication 1, dans lequel l'écran est balayé par trois faisceaux d'électrons, chaque faisceau d'électrons étant modulé à partir d'un signal de modulation (R₀, B₀, G₀), le signal de luminance (Y) étant obtenu à partir d'une somme pondérée des signaux de modulation (R₀, B₀, G₀).

3. Procédé de correction selon la revendication 1, dans lequel l'écran (15) est balayé par au moins un faisceau d'électrons déplacé par au moins une bobine de déflexion, le moyen de correction (17) comprenant une bobine de déflexion additionnelle commandée par un courant variant comme l'intégrale du signal de commande (S_{C}).

4. Procédé de correction selon la revendication 1, dans lequel l'écran (15) est balayé par au moins un faisceau d'électrons déplacé par au moins une bobine de déflexion, le moyen de correction (17) comprenant une bobine de déflexion additionnelle commandée par un courant variant comme le signal de commande (S_{C}).

5. Procédé de correction selon la revendication 1, dans lequel l'écran (15) est balayé par au moins un faisceau d'électrons modulé à partir d'un signal de modulation (R₀, G₀, B₀), un amplificateur (13) recevant le signal de modulation et fournissant un signal de modulation amplifié (R, G, B) à un canon à électrons (14A, 14B, 14C) produisant le faisceau d'électrons, le signal de luminance (Y) utilisé pour la correction de la vitesse de balayage étant obtenu par filtrage du signal de modulation par un filtre (32, 60) ayant sensiblement la même bande passante que l'amplificateur.

6. Procédé de correction selon la revendication 5, dans lequel le filtre (32, 70) impose en outre un retard au signal de luminance (Y) sensiblement égal au retard fourni par l'amplificateur (13).

7. Procédé de correction selon la revendication 1, dans lequel le signal de commande (S_{C}) est amplifié par un gain (K) qui dépend du signal de luminance (Y).

8. Procédé de correction selon la revendication 7, dans lequel le gain (K) dépend de l'évolution du signal de luminance (Y) sur des lignes voisines de la ligne balayée.

9. Procédé de correction selon la revendication 7, dans lequel le gain (K) dépend de la position du faisceau d'électrons par rapport à l'écran.

10. Procédé de correction selon la revendication 1, dans lequel le signal de commande (S_{C}) modifie la vitesse de balayage de sorte que la vitesse de balayage est sensiblement nulle lors de variations du signal de luminance.

11. Dispositif de correction de la vitesse de balayage ligne d'un écran d'affichage (15) par au moins un faisceau d'électrons fourni par un canon à électrons (14A, 14B, 14C) commandé à partir d'un signal de modulation (R₀, G₀, B₀), **caractérisé en ce qu'**il comprend un moyen de commande (16) recevant le signal de modulation et fournissant un signal de commande (S_{C}) à un moyen de correction (17) de la vitesse de balayage ligne, le signal de commande étant obtenu à partir d'un étirement temporel du produit des dérivées première (Y') et seconde (Y") du signal de luminance (Y).
